**Europäisches Patentamt**

**European Patent Office**

**Office européen des brevets**

(19)

(11) Numéro de publication : **0 504 127 A1**

# (12) DEMANDE DE BREVET EUROPEEN

(21) Numéro de dépôt : 92870032.7

(22) Date de dépôt : **02.03.92**

(51) Int. Cl.⁵ : **A01G 17/10**

(30) Priorité : **05.03.91 BE 9100204**

(43) Date de publication de la demande :
**16.09.92 Bulletin 92/38**

(84) Etats contractants désignés :
**DE FR GB IT NL**

(71) Demandeur : **GHENT SUPPLY N.V.
Rozenstraat, 9
B-9810 Eke-Nazareth (BE)**

(72) Inventeur : **Bosmans, Herman
Rozenstraat, 9
B-9810 Eke-Nazareth (BE)**

(74) Mandataire : **Vanderperre, Robert et al
Bureau Vander Haeghen S.A. Rue Colonel
Bourg 108 A
B-1040 Bruxelles (BE)**

(54) **Moyen et procédé pour courber des branches d'arbres.**

(57)    L'invention est relative à un moyen pour courber un rameau d'un arbre, moyen dont une première extrémité est reliée audit rameau, tandis que l'autre extrémité est reliée à un support. Le moyen a des propriétés élastiques au moins pendant une période de deux semaines, mais le moyen a perdu plus de 80% de ses propriétés sous l'influence des conditions météorologiques à l'expiration d'un délai de 10, de préférence 3 semaines à compter de son placement.

EP 0 504 127 A1

La présente invention a pour objet un moyen pour courber des branches d'arbres, en particulier d'arbres fruitiers.

Le courbement des rameaux d'arbres fruitiers est de plus en plus appliqué dans les pépinières fruitières pour des raisons diverses, dont entre autres :

Par le courbement des rameaux il est possible d'obtenir plus rapidement des fruits sur de jeunes arbres par rapport à des arbres dont les rameaux n'ont pas été courbées. Des essais ont montré que par le courbement des rameaux il était possible d'obtenir des fruits sur des arbres fruitiers à haute tige avec un an d'avance par rapport à des arbres fruitiers à haute tige dont les rameaux n'avaient pas été courbés.

L'obtention plus rapide de fruits est au niveau commercial très importante car, par exemple, de nouveaux pommiers doivent être cultivés tous les dix ans pour prendre en considération les variations de goût des consommateurs pour les fruits.

Le courbement des rameaux permet d'obtenir de minces branches qui peuvent difficilement être cassées, du fait qu'elles sont courbées.

Jusqu'à présent, on a proposé diverses méthodes pour courber des rameaux d'arbres.

Selon une première méthode, on pend des poids aux branches à courber. Cette méthode demande beaucoup de temps puisque les poids doivent fréquemment être déplacés en fonction du taux de courbement de la branche. On doit également retirer ces poids de la branche à temps parce que, lors de la période de fructification de la branche, ces poids peuvent causer un surpoids pour la branche. Les poids forment également un poids total important vu les quantités nécessaires par arbre et donc par hectare.

Selon une autre méthode, on utilise des cordes qui sont tendues entre le rameau qui doit être courbé et un support tel qu'un piquet ou bâton enfoncé dans le sol. Cette méthode prend beaucoup de temps, en particulier parce que ces cordelettes doivent être par après retirées, car elles peuvent former un empêchement à l'élagage de l'année suivante et car, lorsque les cordelettes tombent sur le sol (attachées ou non à un morceau de branche), le risque existe que ces cordelettes s'enroulent autour de roues de tondeuses. Un autre inconvénient de l'utilisation d'une cordelette ou corde est que les cordelettes ou cordes entourent la branche et peuvent entrer dans l'écorce de la branche. La croissance de la branche peut ainsi être endommagée.

La présente invention a pour objet une solution pour éviter les inconvénients mentionnés ci-avant. Le moyen pour courber un rameau d'un arbre, dont une première extrémité est attachée au rameau, tandis que la deuxième extrémité est reliée à un support, est un moyen qui a des propriétés élastiques ou de rappel au moins pendant une période de deux semaines après son placement et qui a perdu à l'expiration d'une période de dix semaines à compter de son placement, plus de 80% de son élasticité ou de sa force de rappel sous l'influence des conditions météorologiques.

De préférence, le moyen selon l'invention est un moyen dont plus de 80% de ses propriétés élastiques ou de rappel ont été perdues trois à quatre semaines après son placement.

Un avantage d'une forme de réalisation d'un moyen suivant l'invention est que le moyen se casse 10 semaines , de préférence 16 semaines (± 4 mois) après son placement.

Le moyen suivant l'invention peut être un petit anneau ou bandelette réalisé en caoutchouc, de préférence en caoutchouc naturel.

De façon avantageuse le moyen est réalisé en caoutchouc dont la composition est la suivante :
- 100 parts en poids de caoutchouc naturel ;
- 30 à 40 parts en poids de charge, de préférence de carbonate de calcium ;
- 5 à 20 parts en poids de plastifiants et d'agents lubrifiants (par exemple 10 à 15 parts en poids d'huile de pétrole pour caoutchouc) ;
- 1 à 4 parts en poids d'agents de vulcanisation (par exemple 0,5 à 1,5 part en poids de soufre et 1 à 2 parts en poids d'oxyde de zinc) ;
- 1 à 3 parts en poids d'agents de malaxage (cire de paraffine) ;
- 0,5 à 2 parts en poids d'accélérateurs (par exemple 0,2 à 0,5 part en poids de 2-mercaptobenzothiazole et 0,3 à 0,6 part en poids de bisulfite de tétraméthyle de thiuram) ;
- 2 à 6 parts en poids d'antioxydants et de moyens de protection contre les rayons du soleil (diamine de N-isopropyle-N-phényle-paraphénylène, 1-menthylcyclohexyle) ;
- 0,5 à 1,5 part en poids de stabilisant (acide stéarique) et 0,5 à 1,5 part en poids de colorants (pigment de couleur bleue, dioxyde de titane).

Après vulcanisation de ladite composition, on a préparé un produit en caoutchouc qui avait une force de traction de 100 à 200 kg/cm$^2$ et un allongement à la rupture de 500% à 1000%.

En réalisant un moyen à partir de ladite composition il était possible d'obtenir un moyen
- qui possède des propriètés élastiques au moins pendant une période de deux semaines après son placement ;
- qui perd plus de 80%, de préférence 90% de ses propriétés élastiques trois semaines après son placement sous l'action des conditions météorologiques, et
- qui se casse 16 semaines après son placement.

Des avantages d'un tel moyen sont clairs. Au début, le moyen est élastique de sorte que de faibles mouvements du rameau qui doit être courbé sont possibles. Trois semaines après son placement, le rameau n'est plus soumis à un effort de traction du moyen (le moyen peut à ce moment être considéré comme une simple corde).

16 semaines après son placement le moyen se casse.

L'invention a également pour objet un procédé pour courber des rameaux d'un arbre. Dans ce procédé, on place un moyen suivant l'invention entre un rameau qui doit être courbé et un support, de préférence le tronc de l'arbre.

Le moyen est placé dans un état dans lequel il présente un allongement d'au moins 30%, de préférence d'au moins 50% par rapport à son état de relaxation.

Dans une forme de réalisation du procédé suivant l'invention on utilise une bandelette circulaire ou un petit anneau en tant que moyen. Dans ce procédé, on effectue les étapes suivantes :

– on place deux parties de la bandelette contre le tronc de l'arbre de manière à ce que la bandelette présente une première boucle et une deuxième boucle par rapport au tronc ;

– on introduit la première boucle dans la deuxième boucle de manière à ce que la bandelette entoure le tronc et forme une double maille d'ancrage. Pour fixer la bandelette sur le tronc, on tire sur la première boucle ;

– on introduit dans la première boucle le rameau qui doit être courbé.

D'autres caractéristiques et détails de l'invention ressortiront de la description suivante dans laquelle un procédé de préparation d'un moyen suivant l'invention sera décrit.

Pour la préparation de moyens suivant l'invention on a mélangé ensemble les matières suivantes :

100 kg de caoutchouc naturel ;

35 kg de carbonate de calcium (particules de 0,1 à 1 micron) ;

10 kg d'huile de pétrole pour caoutchouc (agent lubrifiant) ;

2 kg de paraffine (cire) (agent de malaxage) ;

1 kg de soufre (agent de vulcanisation) ;

1,5 kg d'oxyde de zinc (activateur) ;

1 kg d'acide stéarique (stabilisant) ;

0,35 kg de 2-mercaptobenzothiazole (accélérateur) ;

0,4 kg de pigment de couleur bleue ;

0,6 kg de dioxyde de titane ;

2 kg de diamine de N-isopropyl-N-phényl-paraphénylène ;

2 kg de 1-méthylcyclohexyle.

Le mélange a été effectué sur un mélangeur externe. La composition a alors été extrudée sur un mandrin de manière à obtenir un petit tuyau. Ensuite on a vulcanisé ce petit tuyau dans un autoclave à vapeur.

On a coupé applati le petit tuyau en caoutchouc à paroi mince (± 1 mm) pour obtenir des bandelettes ou de petits anneaux ayant une largeur de 3 mm.

Après fabrication, le caoutchouc vulcanisé de couleur bleue avait les propriétés mécaniques suivantes :

effort de traction : 150 kg/cm²

allongement à la rupture : 700%

poids spécifique : 1,05.

On a remarqué que les propriétés mécaniques des bandelettes ou petits anneaux (qui avaient été utilisés pour courber des rameaux) se sont modifiées sous l'influence des conditions météorologiques.

1. Lorsque l'anneau était placé pour courber un rameau, sa force de traction était d'environ 150 kg/cm² ;

2. L'anneau exerçait pendant environ trois semaines une traction sur le rameau. Trois semaines après son placement, la force de traction était inférieure à 30 kg/cm².

3. Ensuite l'anneau est resté solidaire du rameau pendant environ quatre mois.

4. Quatre mois après son placement, l'anneau se casse sous l'influence de rayons UV et sans intervention humaine.

Une méthode pour courber un rameau d'un arbre dans laquelle on utilise une bandelette sera décrite ci-après.

Après l'élagage des jeunes arbres (janvier-février), on place deux parties de la bandelette contre le tronc de sorte que la bandelette présente une première boucle et une deuxième boucle par rapport au tronc.

On introduit alors la première boucle dans la deuxième boucle de sorte que la bandelette entoure le tronc.

On tire sur la première boucle (allongement de 100% de la bandelette par rapport à son état de relaxation). La bandelette est de cette manière fixée sur le tronc au moyen d'une double maille d'ancrage.

Le rameau qui doit être courbé est ensuite introduit dans la première boucle.

## Revendications

1. Moyen pour courber un rameau d'un arbre, moyen dont une première extrémité est reliée audit rameau, tandis que la deuxième extrémité est reliée à un support, caractérisé en ce que le moyen est un moyen qui possède des propriétés élastiques au moins pendant une période de deux semaines après son placement et qui, à l'expiration d'un délai de 10 semaines, a perdu plus de 80% de ses propriétés élastiques sous l'influence des conditions météorologiques.

2. Moyen suivant la revendication 1, caractérisée en ce qu'il est un moyen dont plus de 80% de ses propriétés élastiques sont perdus trois semaines après son placement.

3. Moyen suivant la revendication 1 ou 2, caractérisé en ce qu'il est un moyen qui se casse 10 semaines, de préférence 16 semaines après son placement.

4. Moyen suivant l'une quelconque des revendications précédentes, caractérisé en ce que le moyen est une bandelette circulaire ou un petit anneau.

5. Moyen suivant l'une quelconque des revendications précédentes, caractérisé en ce que le moyen est réalisé en caoutchouc, de préférence en caoutchouc naturel.

6. Moyen suivant la revendication 5, caractérisé en ce que le moyen est réalisé en caoutchouc dont la composition contient les matières suivantes, pour 100 parts en poids de caoutchouc naturel :
   30 à 40 parts en poids de charges ;
   5 à 20 parts en poids de plastifiants et de lubrifiants ;
   1 à 4 parts en poids d'agents de vulcanisation, et
   1 à 3 parts en poids d'agents de malaxage.

7. Moyen suivant la revendication 6, caractérisé en ce que la composition contient également les matières suivantes :
   – au moins 0,5 part en poids de matières pour accroître la résistance contre les UV et/ou d'antioxydants.

8. Moyen suivant la revendication 7, caractérisée en ce que la composition est la suivante :
   – 100 parts en poids de caoutchouc naturel ;
   – 30 à 40 parts en poids de carbonate de calcium (charge) ;
   – 10 à 15 parts en poids d'huile de pétrole pour caoutchouc (agent lubrifiant) ;
   – 1 à 3 parts en poids de paraffine (cire) (agent de malaxage) ;
   – 0,5 à 1,5 part en poids de soufre et 1 à 2 parts en poids d'oxyde de zinc (agent de vulcanisation avec des activateurs) ;
   – 0,5 à 1,5 part en poids d'acide stéarique (stabilisant) ;
   – 0,2 à 0,5 part en poids de 2-mercaptobenzothiazole et 0,3 à 0,6 part en poids de bisulfite de tétraméthyle de thiuram (accélérateur) ;
   – 1 à 3 parts en poids de diamine de N-isopropyle-N-phényle-paraphénylène et 1 à 3 parts en poids de 1-méthylcyclohexyle (antioxydant et moyen pour accroître la résistance contre les rayons du soleil, et

– éventuellement 0,5 à 1,5 part en poids de colorants (pigment de couleur bleue, dioxyde de titane).

9. Procédé pour courber des rameaux d'un arbre au moyen d'un moyen suivant l'une quelconque des revendications précédentes, dans lequel on place entre un rameau qui doit être courbé et un support, un moyen avec un allongement d'au moins de 30%, de préférence d'au moins de 50% par rapport à son état de relaxation.

10. Procédé suivant la revendication 9, caractérisé en ce que le moyen est placé entre le rameau qui doit être courbé et le tronc de l'arbre.

11. Procédé suivant la revendication 10, dans lequel on utilise une bandelette circulaire ou petit anneau en tant que moyen, caractérisé en ce qu'on place deux parties de la bandelette contre le tronc de l'arbre de sorte que la bandelette présente une première boucle et une deuxième boucle par rapport au tronc, en ce qu'on introduit la première boucle dans la deuxième boucle de sorte que la bandelette entoure le tronc, en ce qu'on tire sur une partie de la première boucle de sorte que la bandelette soit fixée sur le tronc et en ce qu'on introduit le rameau qui doit être courbé dans la première boucle.

Office européen
des brevets

**RAPPORT DE RECHERCHE EUROPEENNE**

Numero de la demande

EP    92 87 0032

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-C-926 821 (DIEHL) <br> * le document en entier * <br> --- | 1,5 | A01G17/10 |
| A | BE-A-900 066 (ARENS) <br> * revendications 1,2; figure 3 * <br> --- | 1 | |
| A | WORLD PATENTS INDEX LATEST <br> Week 8625, <br> Derwent Publications Ltd., London, GB; <br> AN 86-160433 <br> & JP-A-61 095 047 (MITSUBISHI MONSANTO) 13 Mai 1986 <br> * abrégé * <br> --- | 1,5,6 | |
| A | FR-A-2 647 633 (GAUTHEROT) <br> * page 1, ligne 27 - page 2, ligne 26; figures 1,2 * <br><br> ----- | 1,3 | |

| | | | DOMAINES TECHNIQUES RECHERCHES (Int. Cl.5) |
|---|---|---|---|
| | | | A01G |

Le présent rapport a été établi pour toutes les revendications

| Lieu de la recherche | Date d'achèvement de la recherche | Examinateur |
|---|---|---|
| LA HAYE | 16 JUIN 1992 | HERYGERS J.J. |

**CATEGORIE DES DOCUMENTS CITES**

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................................
& : membre de la même famille, document correspondant

EPO FORM 1503 03.82 (P0402)